Europäisches Patentamt

(19) European Patent Office

Office européen des brevets

(11) Numéro de publication : **0 123 610**
**B1**

(12) **FASCICULE DE BREVET EUROPÉEN**

(45) Date de publication du fascicule du brevet :
05.04.89

(51) Int. Cl.⁴ : **H 04 N    9/31**

(21) Numéro de dépôt : **84400758.3**

(22) Date de dépôt : **17.04.84**

(54) Appareil de projection d'images vidéo en couleurs sur un écran de grandes dimensions.

(30) Priorité : **26.04.83 FR 8306831**

(43) Date de publication de la demande :
**31.10.84 Bulletin 84/44**

(45) Mention de la délivrance du brevet :
**05.04.89 Bulletin 89/14**

(84) Etats contractants désignés :
**DE FR GB**

(56) Documents cités :
**DE—A— 2 711 865**
**PATENTS ABSTRACTS OF JAPAN, vol. 4, no. 170, 22 novembre 1980, page 20 E 35;**

(73) Titulaire : **SOCIETE ELECTRONIQUE DE LA REGION PAYS DE LOIRE**
**74, rue du Surmelin**
**F-75020 Paris (FR)**

(72) Inventeur : **Colineau, Joseph**
**THOMSON-CSF SCPI 173, bld Haussmann**
**F-75379 Paris Cedex 08 (FR)**

(74) Mandataire : **Grynwald, Albert et al**
**THOMSON-CSF SCPI 19, avenue de Messine**
**F-75008 Paris (FR)**

Jouve, 18, rue St-Denis, 75001 Paris, France

**Description**

L'invention est relative à un appareil de projection, sur un écran de grandes dimensions, d'images vidéos en couleur.

De tels appareils, généralement appelés vidéoprojecteurs, sont de divers types. Le plus courant est celui dans lequel un objectif projette sur l'écran de grandes dimensions l'image fournie par trois tubes de télévision monochromatiques, chaque tube formant une image de l'une des trois couleurs fondamentales. Il existe également des vidéoprojecteurs à modulateur optique interposé entre une source lumineuse et l'écran.

L'inconvénient des vidéoprojecteurs de la première catégorie est que l'image obtenue sur le grand écran est peu lumineuse et d'une résolution limitée. En effet, le flux lumineux atteignant l'écran est, dans les vidéoprojecteurs connus, d'au plus 150 lumens. Il est difficile d'augmenter ce flux sans dépasser la température limite d'échauffement des couches de phosphores des tubes et des objectifs généralement en matière plastique. Il est certes possible d'augmenter le flux lumineux en refroidissant les tubes ; mais une installation de refroidissement est onéreuse et encombrante.

L'invention, qui s'applique à tous les types de vidéoprojecteurs, permet d'augmenter la luminosité de l'image sur le grand écran, sans perte de résolution.

Elle est caractérisée en ce que l'appareil étant du type à au moins deux dispositifs (tels que des tubes de télévision) de projection d'images superposées, on prévoit un circuit de traitement du signal vidéo tel que le premier de ces deux dispositifs restitue le signal de fond de l'image, ce circuit de traitement comprenant un circuit d'exploration qui recherche la valeur la plus faible de luminance au point projeté et autour de celui-ci et qui affecte cette valeur minimum de luminance au signal d'alimentation du dispositif de restitution du fond. De préférence, le second dispositif fournit une image complémentaire où prédominent les contours, c'est-à-dire les transitions de luminance de l'image.

La superposition d'une image nette, formée principalement des contours, et d'une image floue permet bien entendu l'augmentation de la luminosité de l'image, du seul fait du doublement des dispositifs de projection. Mais il est surtout intéressant de noter que les images projetées par ces deux dispositifs supportent, sans perte de résolution, un décalage relativement important.

Si les deux dispositifs de projection fournissaient des images identiques, contenant à la fois le fond et les contours, il faudrait, comme on l'a constaté, une très grande précision dans la superposition des images projetées pour que la résolution reste convenable. Cette précision dans la superposition de deux images identiques qu'il est nécessaire de prévoir pour conserver une bonne résolution est nettement plus importante que la précision qu'il faut prévoir pour superposer, sans perte de résolution, deux images non identiques, par exemple de couleurs différentes. Avec l'invention, au contraire, les tolérances de décalage des images projetées sont relativement grandes.

Dans le mode de réalisation préféré les deux dispositifs de projection sont alimentés de façon telle que la puissance dissipée soit répartie de façon égale pour les forts niveaux de lumière alors que, pour les niveaux moyens ou faibles le dispositif produisant le fond lumineux supporte une puissance plus grande que le second dispositif, surtout si celui-ci ne projette que les contours. De cette manière le flux maximum est important et, pour de faibles éclairements, la résolution est excellente.

Pour produire les signaux représentatifs des contours on prévoit, dans un premier exemple, un circuit d'extraction des contours qui élabore la dérivée première du signal vidéo à partir de laquelle on engendre le signal de contour ainsi que le signal de fond, lequel correspond à la différence entre le signal vidéo et le signal de contour.

Dans un second exemple le signal de fond est élaboré par exploration de la luminance dans une petite zone entourant le point courant. Le fond est alors constitué par le minimum de luminance dans cette zone. Comme dans le cas précédent le signal de contour est la différence entre le signal vidéo et ce signal de fond.

Chaque dispositif de projection est dans un exemple un vidéo-projecteur proprement dit constitué par trois tubes monochromatiques respectivement rouge R, vert V et bleu B. Dans ce cas, pour fournir le signal de fond de l'image il peut être suffisant que le circuit de traitement n'affecte que le signal de luminance Y et non les signaux R-Y et B-Y.

L'invention s'applique également quand on a affaire à un vidéo-projecteur dont un dispositif de projection monochromatique est doublé, c'est-à-dire comportant deux dispositifs de projection de la même couleur.

Dans ce cas si un seul des dispositifs de projection monochromatique est doublé ce sera de préférence celui qui engendre le flux lumineux le plus important ou celui qui est soumis aux contraintes thermiques les plus importantes. Ainsi dans le cas de tubes cathodiques monochromatiques on doublera le tube émettant la lumière verte, ce dernier étant celui qui participe dans la plus grande mesure à l'éclairement de l'écran.

D'autres caractéristiques et avantages de l'invention apparaîtront avec la description de certains de ses modes de réalisation, celle-ci étant effectuée en se référant aux dessins ci-annexés sur lesquels :

— les diagrammes des figures 1a à 1c et 2a à 2d montrent que la superposition de deux images identiques de même couleur nécessite une grande précision,

2

— la figure 3 est un schéma d'une partie de l'appareil selon l'invention,

— les figures 4a à 4c sont des diagrammes montrant le traitement des signaux appliqués aux deux tubes cathodiques de la même couleur dans l'appareil selon l'invention,

— la figure 5 est le schéma d'un circuit de l'appareil selon l'invention,

— les figures 6a à 6e sont des diagrammes destinés à illustrer le fonctionnement du circuit de la figure 5,

— la figure 7 est un schéma pour un circuit·de l'appareil de l'invention basé sur un autre principe que celui de la figure 5,

— les figures 8a à 8e sont des diagrammes montrant le fonctionnement du circuit de la figure 7,

— la figure 9 est un schéma d'une partie du circuit de la figure 7,

— la figure 10 est un schéma de circuit de traitement pour une variante, et

— la figure 11 est également un schéma de circuit de traitement, mais encore pour une autre variante.

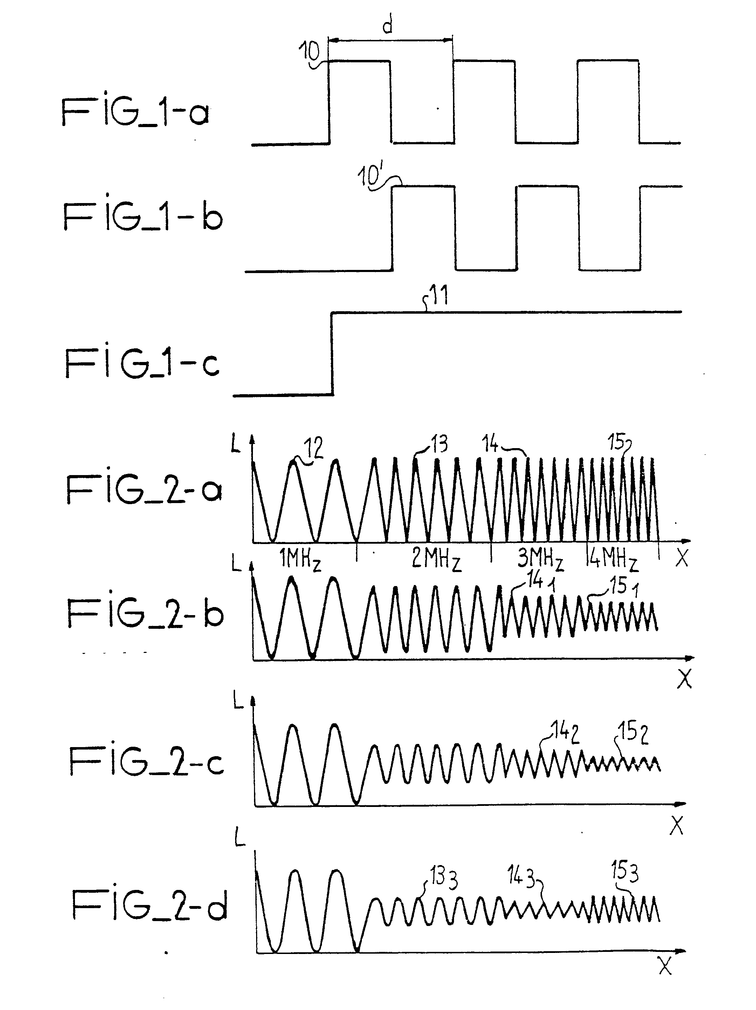

La figure 1a représente la variation de luminosité de l'écran sur une partie de ligne (de balayage télévision) quand on projette des barres lumineuses régulièrement espacées. La période (qui est ici une distance) de répétition est d. Chaque barre lumineuse correspond.ainsi à une impulsion 10.

Si un second tube de la même couleur projette la même image sur l'écran avec un décalage horizontal égal à d/2, les impulsions 10' correspondant aux barres lumineuses du second tube apparaîtront dans les intervalles séparant les impulsions lumineuses 10. Dans ce cas, où la largeur de chaque barre est au moins égale à d/2, on obtiendra, comme le montre la figure 1c, un éclairement uniforme sur l'écran.

On comprend donc qu'un décalage, même léger, entre les images projetées entraîne une perte de résolution qui peut être importante. On aura une appréciation encore plus précise de cette perte de résolution par l'examen des schémas des figures 2a à 2d.

La figure 2a représente le signal appliqué à deux tubes monochromes de la même couleur projetant leurs images sur un même écran carré de 2 mètres de côté. Ce signal correspond à une mire « multiburst » formée de plusieurs séries de barres, l'espacement entre les barres étant constant dans une même série. Ce signal comprend des impulsions 12 à 1 mégahertz, des impulsions 13 à 2 mégahertz, des impulsions 14 à 3 mégahertz et des impulsions 15 à 4 mégahertz.

Si les deux tubes projettent des images parfaitement superposées sur l'écran la luminance variera, sur ce dernier, exactement comme sur la figure 2a.

Par contre si les deux projections présentent un décalage horizontal de 3 mm on obtiendra sur l'écran un éclairement qui variera comme montré sur la figure 2b, c'est-à-dire que les impulsions $14_1$ et $15_1$ à 3 et 4 mégahertz seront atténuées, les impulsions 15, qui correspondent aux traits les plus rapprochés, subissant la plus forte atténuation.

Si ce décalage est de 4,5 mm (figure 2c) les traits $15_2$ qui correspondent à des impulsions à 4 mégahertz seront pratiquement invisibles sur l'écran et les traits $14_2$ correspondant à des impulsions de 3 mégahertz seront encore plus fortement atténués.

Si le décalage horizontal entre les projections est de 6 mm on constate (figure 2d) que les traits $14_3$ correspondant aux impulsions à 3 mégahertz seront invisibles, les traits $15_3$ correspondant aux impulsions à 4 mégahertz seront atténués, de même que les traits $13_3$ correspondant aux impulsions à 2 mégahertz.

L'appareil selon l'invention, qui comporte deux tubes monochromes de même couleur, permet de restituer parfaitement la mire de la figure 2a même avec des décalages supérieurs à 7 mm entre les images projetées.

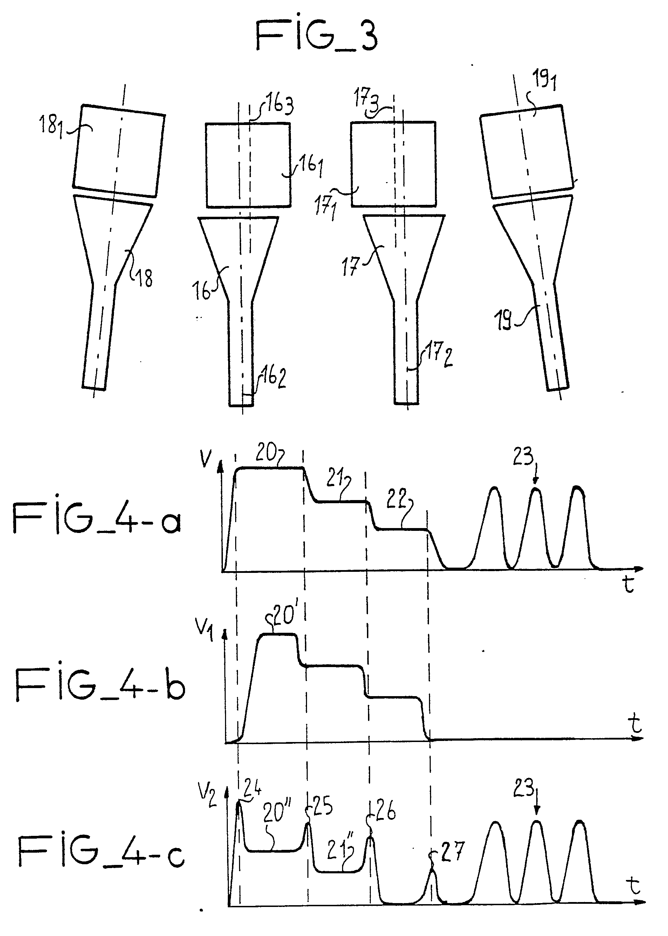

Dans l'exemple représenté sur la figure 3 l'appareil comprend quatre tubes cathodiques monochromatiques : un premier tube cathodique 16 dont l'écran est recouvert de substances luminescentes n'émettant que la lumière verte, un second tube cathodique 17 identique au tube 16 et disposé à côté de ce dernier, et de chaque côté de l'ensemble formé par ces deux tubes verts, du côté du tube 16, un troisième tube 18 fournissant une image bleue et du côté du tube 17 un quatrième tube 19 fournissant une image rouge.

A chacun de ces tubes est associé un objectif, $16_1$ à $19_1$, destiné à projeter l'image formée par le tube correspondant sur l'écran (non représenté).

L'axe optique de l'objectif $18_1$ est confondu avec l'axe du tube 18. De même l'axe optique de l'objectif $19_1$ est confondu avec l'axe du tube 19. Par contre l'axe $16_2$ du tube 16 est décalé, tout en lui restant parallèle, par rapport à l'axe $16_3$ de l'objectif $16_1$. L'axe $17_2$ du tube 17 est parallèle à l'axe $16_2$ et est également décalé par rapport à l'axe $17_3$ de l'objectif $17_1$, cet axe $17_3$ étant parallèle à l'axe $17_2$.

Les axes des objectifs $18_1$ et $19_1$ ne sont pas parallèles aux axes $16_3$ et $17_3$.

Le décalage de l'axe $16_2$ par rapport à l'axe $16_3$ et de l'axe $17_2$ par rapport à l'axe $17_3$ permet de faire converger les images produites par ces tubes 16 et 17 sur l'écran qui se trouve dans le plan focal de ces objectifs. Les axes des objectifs $18_1$ et $19_1$ convergent sur l'écran.

La disposition côte à côte et à axes parallèles des deux tubes verts 16 et 17 minimise les distorsions géométriques ainsi que celles qui seraient dues à l'influence des champs magnétiques.

Selon une disposition importante de l'invention le tube vert 16 est alimenté de telle manière qu'il restitue le fond lumineux de l'image sans les détails fins tandis que le tube 17 restitue les contours de l'image en ne contribuant que pour une faible part au fond lumineux.

Cette séparation du signal en fond et en contour est représentée sur les figures 4a à 4c.

Le diagramme de la figure 4a représente un signal vidéo v correspondant à une image présentant des plages uniformes 20, 21, 22 et des détails fins 23.

Le tube 16 est alimenté par un signal $v_1$ (figure 4b) restituant les fonds de l'image c'est-à-dire duquel sont éliminés les transitions brusques, à savoir les détails fins 23 ainsi que les fronts de montée et de descente des plages uniformes 20, 21, 22. Ainsi la plage 20′ est plus étroite que la plage 20 du signal complet.

Le diagramme de la figure 4c représente le signal alimentant le tube 17 qui est le complémentaire du signal de la figure 4b par rapport au signal de la figure 4a : pour les fronts de montée et de descente des signaux des plages 20, 21, 22 il fournit des impulsions 24, 25, 26, 27. Les impulsions 23 sont restituées intégralement. Mais les plages 20 et 21 sont restituées en parties (signaux 20″ et 21″) car pour les énergies lumineuses élevées il est préférable de répartir la puissance sur les deux tubes 16 et 17. Par contre, pour les niveaux moyens d'éclairement tels que le niveau de la plage 22 ainsi que pour les niveaux faibles le tube 17 ne contribue pas à la restitution du fond lumineux.

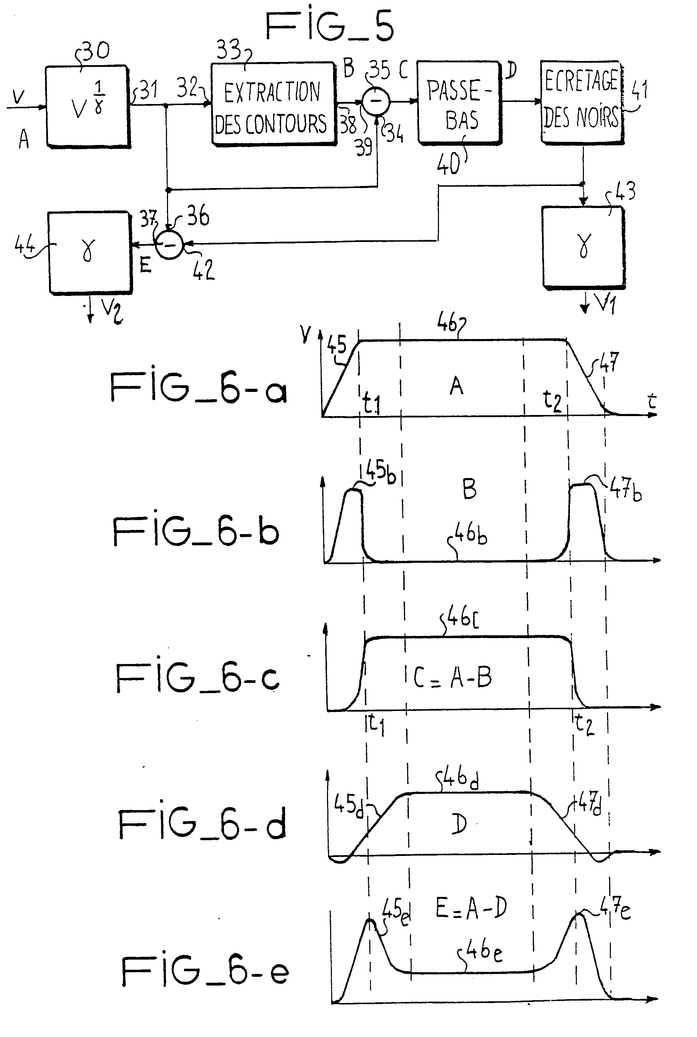

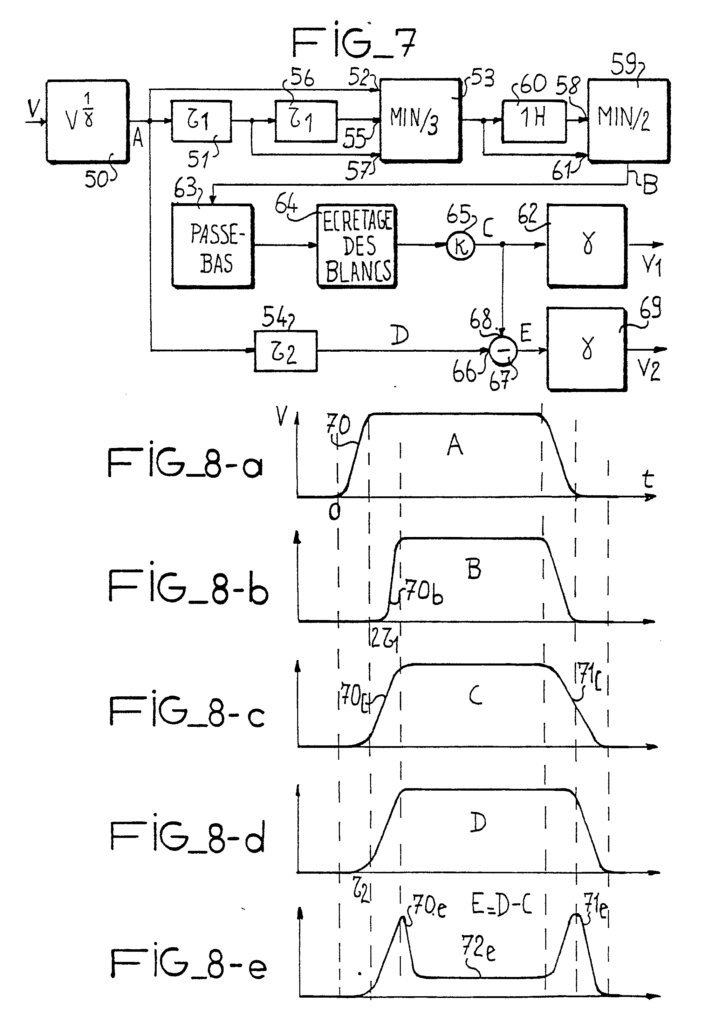

Avant de décrire deux exemples de réalisation (figures 5 et 7) de circuits d'alimentation des tubes verts 16 et 17 il est utile de mentionner, pour une bonne compréhension de ces circuits, que la relation suivante doit être satisfaite :

$$L(x, y) = L_1(x, y) + L_2(x, y)$$

$L(x, y)$ est la luminance de l'image à produire sur l'écran, $L_1(x, y)$ et $L_2(x, y)$ étant les luminances produites sur l'écran par les tubes, respectivement 16 et 17.

Mais les tubes de projection n'ont pas une caractéristique linéaire, c'est-à-dire que la luminance produite ne varie pas de façon proportionnelle au signal vidéo V, mais selon la relation suivante :

$$L(x, y) = K v^{\frac{1}{\gamma}} (x, y)$$

dans cette formule $\gamma$ est appelé le « gamma » du tube et K est une constante.

Il en résulte :

$$v^{\frac{1}{\gamma}} (x, y) = v_1^{\frac{1}{\gamma}} (x, y) + v_2^{\frac{1}{\gamma}} (x, y)$$

En outre les signaux $v_1$ et $v_2$ devront être tous les deux positifs ou nuls si le niveau de noir et le sens du signal vidéo sont correctement choisis.

Le circuit représenté sur la figure 5 comprend tout d'abord un circuit 30 d'élévation à la puissance $1/\gamma$, c'est-à-dire effectuant une correction inverse de gamma, qui reçoit sur son entrée le signal vidéo v dont un exemple est représenté sur le diagramme de la figure 6a.

Le signal en sortie 31 du circuit 30 est ainsi proportionnel à la luminance.

Cette sortie 31 est reliée, d'une part, à l'entrée 32 d'un circuit 33 d'extraction des contours, d'autre part enfin, à l'entrée positive 34 d'un soustracteur 35 et, d'autre part enfin, à l'entrée positive 36 d'un autre soustracteur 37.

Le circuit 33 délivre sur sa sortie 38 un signal proportionnel à la valeur absolue de la dérivée première du signal vidéo dans les directions horizontale et verticale. La figure 6b représente le signal B obtenu à la sortie 38 du circuit 33 lorsque le signal v à l'entrée du circuit 30 est celui de la figure 6a.

Cette sortie 38 du circuit 33 est connectée à l'entrée négative 39 du soustracteur 35.

Le signal C obtenu en sortie du soustracteur 35 est représenté sur la figure 6c.

Cette sortie du soustracteur 35 est reliée à l'entrée d'un filtre passe-bas 40 qui élargit le signal fourni par le soustracteur 35 sans toutefois que la largeur du signal D ainsi obtenu, représenté sur la figure 6d, soit supérieure à celle du signal vidéo v (figure 6a).

La sortie du filtre passe-bas 40 est reliée à l'entrée d'un circuit 41 d'écrêtage des noirs destiné à supprimer les signaux négatifs.

La sortie du circuit 41 est reliée d'une part à l'entrée négative 42 du soustracteur 37 et d'autre part à l'entrée d'un circuit 43 de correction de gamma.

La sortie du soustracteur 37 est reliée à l'entrée d'un autre circuit 44 de correction de gamma.

En sortie du circuit 43 on obtient un signal $v_1$ de fond destiné à alimenter le tube 16. En sortie du circuit 44 on obtient un signal $v_2$ de contour destiné à alimenter le tube 17.

Le signal E en sortie du soustracteur 37 est représenté sur la figure 6e.

Dans l'exemple de fonctionnement présenté dans les figures 6a à 6e le signal vidéo A présente un front de montée 45, est constant entre les instants $t_1$ et $t_2$ (droite 46) puis comporte un front de descente 47 après l'instant $t_2$.

Ainsi le signal B (figure 6b) en sortie du circuit 33, qui est la valeur absolue de la dérivée du signal A, comporte deux impulsions 45b, 47b correspondant aux fronts, respectivement 45 et 47, et ces impulsions sont séparées par un signal 46b de valeur nulle.

Le signal C en sortie du soustracteur 35 se présente donc sous la forme d'un signal constant 46c entre les instants $t_1$, $t_2$, ce signal étant nul avant $t_1$ et après $t_2$.

Le filtre passe-bas 40 permet d'incliner les fronts de montée et de descente du signal $46_c$. Ainsi le signal D en sortie du filtre 40 présente une partie centrale 46d de valeur constante et des signaux de montée 45d et de descente 47d qui s'étendent sur des périodes non négligeables, le signal 45d ayant la valeur moitié de celle du signal 46d au temps $t_1$ et, de même, le signal 47d a sensiblement la valeur moitié de celle du signal 46d au temps $t_2$.

Ce signal D représente le fond.

Le signal E en sortie du soustracteur 37 (figure 6e) est la différence entre le signal A et le signal D. C'est le signal de contour. Il présente une partie centrale 46e de faible niveau et des parties d'extrémités 45e et 47e de plus forts niveaux.

On se réfère maintenant à la figure 7 et aux figures 8a et 8e.

Dans cet exemple le signal de fond n'est pas obtenu par l'extraction des contours mais par exploration : pour chaque point on cherche dans une petite zone qui l'entoure quel est le minimum de luminance.

Le signal vidéo v est appliqué à l'entrée d'un circuit 50 de correction inverse de gamma. Le signal A en sortie du circuit 50 est ainsi proportionnel à la luminance.

Le signal de sortie du circuit 50 est appliqué à l'entrée d'un élément de retard 51 qui retarde d'une durée $\tau_1$, de 150 nanosecondes dans l'exemple, le signal appliqué sur son entrée. La sortie du circuit 50 est également connectée à la première entrée 52 d'un comparateur 53 ainsi qu'à l'entrée d'un circuit 54 de remise en phase constitué par un autre élément de retard, de durée $\tau_2$.

La sortie de l'élément 51 est connectée à une seconde entrée 55 du comparateur 53 par l'intermédiaire d'un autre élément de retard 56 de durée $\tau_1$ ainsi qu'à la troisième entrée 57 dudit comparateur 53.

La sortie du comparateur 53 est connectée, d'une part, à la première entrée 58 d'un autre comparateur 59 par l'intermédiaire d'un élément de retard 60 qui retarde le signal appliqué sur son entrée de la durée H de balayage d'une ligne, et d'autre part, directement à la seconde entrée 61 dudit comparateur 59.

La sortie du comparateur 59 est reliée à l'entrée d'un circuit 62 de correction de gamma par l'intermédiaire d'un filtre passe-bas 63, d'un circuit 64 d'écrêtage des blancs et d'un atténuateur 65, tous en série.

La sortie de l'élément 54 de remise en phase est reliée à l'entrée positive 66 d'un soustracteur 67 dont l'entrée négative 68 est reliée à la sortie de l'atténuateur 65. La sortie de ce soustracteur 67 est connectée à l'entrée d'un second circuit 69 de correction de gamma.

Le signal $v_1$ en sortie du circuit 62 constitue le signal de fond destiné à alimenter le tube 16 tandis que le signal $v_2$ en sortie du circuit 69 constitue le signal de contour alimentant le tube 17.

Le comparateur 53 est tel qu'il délivre sur sa sortie celui des signaux appliqués sur ses entrées qui a la plus faible luminance. De même sur la sortie du comparateur 59 apparaît celui des signaux appliqués sur les entrées 58 et 61 qui a la plus faible luminance.

Ainsi on compare la luminance de trois points de la ligne courante et d'un point de la ligne précédente. On pourrait, bien entendu, choisir pour cette exploration un nombre plus important de points et/ou de lignes.

La figure 8a représente un signal A en sortie du circuit 50 analogue au signal de la figure 6a.

La figure 8b représente le signal B en sortie du comparateur 59. On notera que le front de montée 70b de ce signal est retardé de $2\tau_1$ par rapport au front de montée 70 du signal A.

Le signal C de la figure 8c est le signal à la sortie de l'atténuateur 65. Il se différencie du signal B par le fait que ses fronts de montée 70c et de descente 71c sont plus étalés dans le temps que les fronts correspondants du signal B.

La figure 8d représente le signal D en sortie du circuit 54 de remise en phase. Ce signal D correspond au signal A retardé de $\tau_2$. $\tau_2$ est la somme de $\tau_1$ et du retard apporté par le filtre passe-bas 63.

Enfin le signal E représenté sur la figure 8e est la différence entre les signaux D et C, c'est-à-dire entre le signal vidéo complet et le signal de fond ; c'est donc le signal de contour avec, dans l'exemple, une partie centrale 72e de faible niveau entourée par des crêtes 70e, 71e formant les contours.

Les circuits 64 et 65 permettent d'équilibrer la puissance moyenne dissipée par chacun des tubes 16 et 17. Dans l'exemple on utilise simultanément un circuit 64 d'écrêtage des blancs et un atténuateur 65 ; cependant, en variante, on utilise soit le circuit 64 seul, soit le circuit 65 seul.

Si le circuit 64 est utilisé sans l'atténuateur 65 (ou si K = 1) pour les faibles luminances le tube 16 restitue le fond lumineux de l'image et le tube 17 uniquement les contours. Pour les fortes luminances, la puissance du tube 16 étant limitée, le tube 17 aide à fournir le complément de fond lumineux (comme c'est le cas pour le signal 72e de la figure 8e).

Si l'atténuateur 65 est utilisé seul ; K < 1 le fond est, dans tous les cas, restitué par les deux tubes. Si le coefficient est légèrement supérieur à 0,5 les puissances moyennes dissipées par les deux tubes seront alors équilibrées.

Il est également possible de combiner les circuits 64 et 65 d'une manière différente de celle représentée sur la figure 7, le type de combinaison dépendant de la répartition désirée des puissances sur les tubes 16 et 17.

Quel que soit le mode de réalisation adopté les inconvénients résultant de la superposition d'images fournies par deux tubes alimentés par des signaux vidéo identiques et qui ont été décrits en relation avec les figures 2b à 2d ne se retrouvent plus avec l'appareil de l'invention.

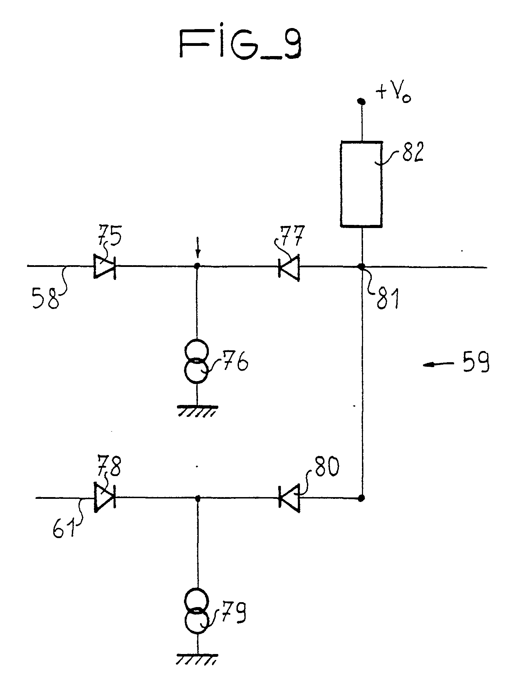

La figure 9 représente un exemple de réalisation de comparateur 59 (figure 7).

L'entrée 58 est connectée à l'anode d'une diode 75 dont la cathode est reliée à la masse par l'intermédiaire d'un générateur de courant 76. Cette cathode de la diode 75 est également connectée à la cathode d'une autre diode 77.

De même l'entrée 61 est connectée à l'anode d'une diode 78 dont la cathode est reliée à la masse par l'intermédiaire d'un générateur de courant 79. La cathode de la diode 78 est également reliée à la cathode d'encore une autre diode 80.

Les anodes des diodes 77 et 80 sont reliées entre elles ainsi qu'à la sortie 81 dudit comparateur 59. Cette sortie 81 est également connectée, par l'intermédiaire d'une résistance 82, à une source de potentiel positif $+ V_0$.

Sur la sortie 81 apparaît le potentiel le plus faible parmi ceux qui sont appliqués sur les entrées 58 et 61.

Dans les réalisations décrites ci-dessus en liaison avec les figures 5 et 7 on fait appel à un filtre passe-bas, 40 ou 63, pour former le signal de fond en vue d'alimenter le tube 16. En variante le filtrage passe-bas est réalisé, en totalité ou en partie, par une défocalisation du tube 16 et/ou de l'objectif $16_1$. Cette variante présente, en plus de la simplification du circuit de traitement, l'avantage de permettre l'utilisation de tubes 16 et d'objectifs $16_1$ d'une qualité médiocre et donc bon marché. On peut en outre choisir un phosphore vert à spectre d'émission plus large que celui des phosphores actuellement utilisés et avec une meilleure caractéristique électrooptique c'est-à-dire avec un meilleur rendement (rapport de l'intensité du faisceau d'électrons à la brillance de l'image), une meilleure tenue en température et un meilleur trainage.

Cet avantage résulte du fait que jusqu'à présent le choix du phosphore vert est limité par l'objectif de projection. Celui-ci n'étant pas corrigé contre les aberrations chromatiques, l'obtention d'une image de bonne résolution nécessite un phosphore à spectre étroit. Une résolution plus faible ne pénalise pas le signal de fond. Autrement dit, l'addition d'un tube pour augmenter la luminosité de l'image n'entraîne pas une augmentation importante du coût de l'appareil.

Il va de soi que le signal de contour peut subir les traitements connus destinés à améliorer l'aspect de l'image tels qu'un seuil ou « coring » qui élimine le bruit dudit signal de contour et/ou une amplification de ce signal pour accroître, de façon artificielle, la résolution de l'image.

L'invention n'est pas limitée au cas où on utilise deux (ou plus) tubes produisant des images de la couleur verte. On peut également faire appel à plusieurs tubes rouges et/ou bleus.

En variante deux tubes reproduisent le fond et un tube reproduit le contour.

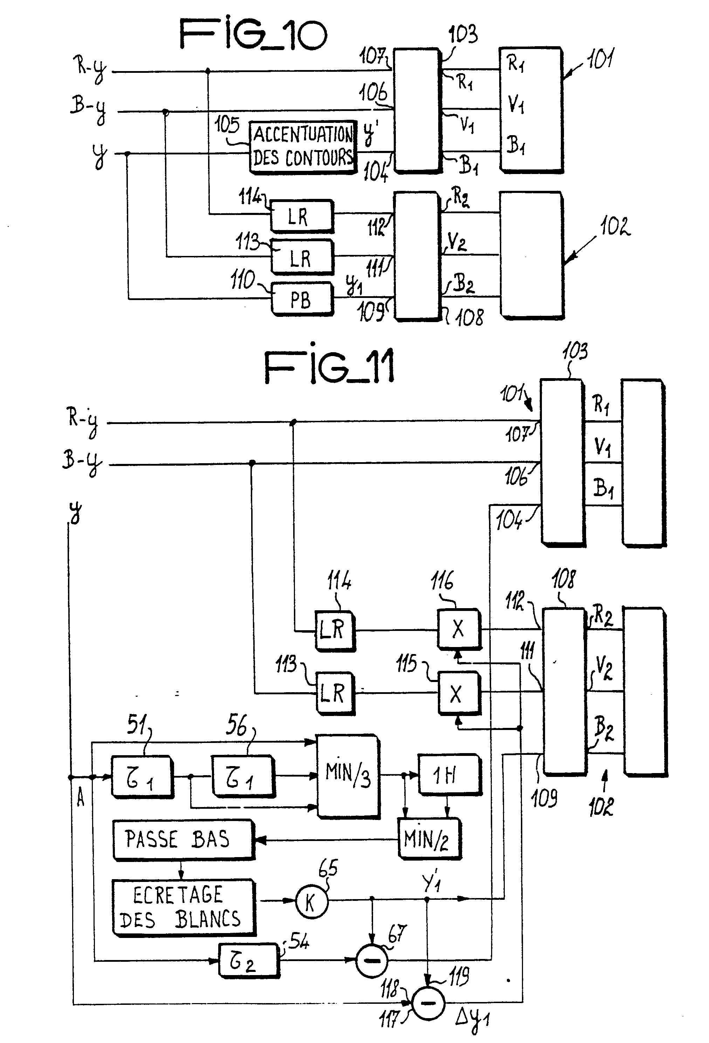

On se réfère maintenant aux figures 10 et 11 qui se rapportent à un mode de réalisation dans lequel on couple deux vidéo-projecteurs standards, c'est-à-dire déjà disponibles dans le commerce. L'avantage de cette réalisation par rapport à celle précédemment décrite est qu'elle impose un minimum de modifications des appareils existants. En outre on obtient une meilleure fiabilité car si l'un des deux vidéo-projecteurs est en panne l'autre peut fonctionner seul.

On peut, comme dans les réalisations précédemment décrites, fournir un signal de fond à l'un des vidéo-projecteurs et un signal de contour à l'autre vidéo-projecteur. Mais il est préférable d'extraire le signal de fond d'image uniquement du signal de luminance Y et de ne pas affecter ce traitement aux signaux R-Y et B-Y. De cette manière, il n'est pas indispensable d'effectuer une correction en $1/\gamma$ car une erreur sur la luminance, qui peut se traduire par un défaut de saturation, est peu gênante, alors que les défauts de teinte susceptibles de se produire lorsque les composantes R-Y et B-Y sont traitées sont beaucoup plus désagréables à l'œil.

Dans l'exemple de la figure 10 le circuit de matriçage 103 du premier vidéo projecteur 101 reçoit sur son entrée 104 de luminance un signal Y' constituant le signal de sortie d'un circuit 105 d'accentuation des contours dont l'entrée reçoit le signal de luminance Y. Les deux autres entrées 106 et 107 du circuit de matriçage 103 reçoivent, de façon classique, les signaux B-Y et R-Y. Sur les sorties du circuit 103 on obtient, de façon en soi connue, des signaux $R_1$ de rouge, $V_1$ de vert et $B_1$ de bleu.

L'entrée de luminance 109 du circuit de matriçage 108 du second vidéo-projecteur 102 reçoit le signal de luminance Y par l'intermédiaire d'un filtre passe-bas (PB) 110. Ainsi l'entrée 109 du circuit de matriçage 108 reçoit un signal $Y_1$ qui représente un signal sans détails fins. Pour tenir compte du retard apporté par le filtre passe-bas 110 les deux autres entrées 111 et 112 du circuit de matriçage 108 reçoivent les signaux B-Y et R-Y par l'intermédiaire d'éléments à retard (LR), respectivement 113 et 114. De façon classique le circuit de matriçage 108 présente trois sorties délivrant des signaux de rouge $R_2$, de vert $V_2$ et de bleu $B_2$.

Dans une variante simplifiée l'entrée 104 du circuit 103 reçoit directement le signal de luminance Y, c'est-à-dire qu'on ne prévoit pas de circuit 105 d'accentuation des contours.

Le circuit de la figure 10 présente l'avantage d'être d'une très grande simplicité. Toutefois, son contraste n'est pas toujours satisfaisant car le vidéo-projecteur 102 dans les zones de détails fins projette une zone uniforme qui se superpose aux détails fins restitués par le vidéo-projecteur 101.

Pour un meilleur contraste on préférera le circuit de traitement représenté sur la figure 11.

Dans ce dernier exemple les signaux fournis au vidéo-projecteur 101 sont les mêmes que dans le cas de la figure 10 et le traitement du signal de luminance Y préalablement à son application sur les entrées correspondantes de luminance 104 et 109 des circuits de matriçage 103 et 108 est effectué comme dans la figure 7. Toutefois, contrairement à la figure 7, on ne prévoit pas de correction de gamma, c'est-à-dire que, dans l'exemple de la figure 11, les circuits 50, 62 et 69 ont été omis.

Ainsi la sortie de l'atténuateur 65 est reliée directement à l'entrée 109 du circuit 108 et la sortie du soustracteur 67 est connectée directement à l'entrée 104 du circuit de matriçage 103. De même le signal de luminance Y est appliqué directement sur l'entrée de l'élément de retard 51 et sur l'entrée de l'élément de retard ou déphasage 54.

Comme dans la réalisation de la figure 10 on prévoit des éléments de retard 113 et 114 dans la connexion entre les entrées B-Y et R-Y et les entrées 111 et 112 du circuit de matriçage 108 du vidéo-projecteur 102. Pour éviter de perturber les couleurs de l'image fournie par ledit second vidéo-projecteur 102 en raison du traitement produisant un signal de fond, où les contours sont supprimés, on atténue de manière correspondante les signaux de différences de couleurs R-Y et B-Y appliqués au circuit de matriçage 108. A cet effet, entre l'élément de retard 113 et l'entrée 111 du circuit 108 on prévoit un amplificateur 115 à gain variable. De même entre l'élément de retard 114 et l'entrée 112 du circuit 108 est intercalé un autre amplificateur 116 à gain variable. Le signal de commande du gain des amplificateurs 115 et 116 est fourni par la sortie $\Delta Y_1$ d'un soustracteur 117 dont la première entrée 118 reçoit le signal de luminance Y et la seconde entrée 119 reçoit le signal $Y_1$ de fond de luminance comme l'entrée 109 du circuit de matriçage 108. Le signal $\Delta Y_1$ qui est ainsi la différence entre le signal de luminance et le signal de fond ; il a une forte valeur aux contours. Plus ce signal est élevé plus le gain des amplificateurs 115 et 116 est petit.

Dans les exemples des figures 10 et 11 les contours peuvent, comme dans les autres modes de réalisation, être augmentés artificiellement dans le premier vidéo-projecteur 101 pour compenser l'absence de contours fournis par le second vidéo-projecteur 102. On a constaté qu'une augmentation du niveau des contours d'environ 3 décibels est suffisante.

Enfin, en ce qui concerne les figures 10 et 11 on prévoit de préférence un sélecteur de mode constitué par des commutateurs (non représentés) qui permettent soit d'envoyer les signaux R-Y, B-Y et Y sur les entrées des circuits de matriçage 103 et 108 comme décrit en relation avec ces figures 10 et 11, soit d'envoyer directement ces signaux sur les entrées correspondantes du circuit 103 seul, soit encore d'appliquer directement ces signaux Y, B-Y, R-Y sur les seules entrées correspondantes du circuit 108.

## Revendications

1. Appareil de projection d'images vidéos comprenant au moins deux dispositifs de projection ($16_1$, 17 ; 101, 102) d'images superposées, caractérisé en ce qu'il comporte un circuit de traitement du signal vidéo tel que le premier de ces dispositifs (16) restitue le signal de fond de l'image, ce circuit de traitement comprenant un circuit d'exploration qui recherche la valeur la plus faible de luminance au point projeté et autour de celui-ci et qui affecte cette valeur minimum de luminance au signal d'alimentation du dispositif (16) de restitution du fond.

2. Appareil selon la revendication 1, caractérisé en ce que le circuit de traitement du signal vidéo est tel que le second dispositif de projection (17 ; 102) restitue les contours de l'image, le signal de contour étant le complémentaire du signal de fond par rapport au signal vidéo.

3. Appareil selon la revendication 1 ou 2, caractérisé en ce que le circuit de traitement comprend des moyens pour répartir la puissance dissipée par chacun des dispositifs (16, 17) de projection de manière telle que, pour les forts niveaux de lumière, la puissance dissipée par chacun de ces dispositifs soit la même et, pour les niveaux de lumière moyens et faibles, le dispositif de restitution du fond lumineux émette plus de puissance que le second dispositif (17).

4. Appareil selon l'une quelconque des revendications 1 à 3, caractérisé en ce que les deux dispositifs de projection sont monochromatiques de la même couleur.

5. Appareil selon la revendication 4, caractérisé en ce que le vert est la couleur commune des deux dispositifs de projections (16, 17) restituant respectivement le fond et le contour de l'image.

6. Appareil selon la revendication 5, caractérisé en ce que lesdits dispositifs étant des tubes cathodiques, le tube (16) restituant le fond comporte des phosphores verts à large spectre d'émission.

7. Appareil selon l'une quelconque des revendications précédentes, caractérisé en ce que le dispositif de projection (16) destiné à restituer le fond de l'image est défocalisé.

8. Appareil selon l'une quelconque des revendications 4 à 6, caractérisé en ce que les dispositifs (16, 17) de projection monochromatiques étant des tubes cathodiques, les deux tubes (16, 17) de la même couleur sont disposés côte à côte avec leurs axes ($16_2$, $17_2$) parallèles entre eux et aux axes ($16_3$, $17_3$) des objectifs correspondants ($16_1$, $17_1$), les axes de ces tubes étant cependant décalés par rapport aux axes des objectifs afin que les images projetées par ces deux tubes convergent sur l'écran de projection.

9. Appareil selon la revendication 8, caractérisé en ce que les axes des deux autres tubes (18, 19) sont dans le même plan que les axes des tubes de la même couleur, et sont inclinés par rapport auxdits axes pour assurer la convergence sur l'écran de projection.

10. Appareil selon la revendication 2, caractérisé en ce que le circuit de traitement comprend un circuit (33) d'extraction des contours du signal vidéo (v) d'entrée et un soustracteur (35) qui, pour produire le signal de fond, soustrait le signal produit par le circuit d'extraction (33) du signal vidéo.

11. Appareil selon la revendication 10, caractérisé en ce que le soustracteur (35) est suivi par un filtre passe-bas (40).

12. Appareil selon la revendication 11, caractérisé en ce qu'il comprend un second soustracteur (37) destiné à oter du signal vidéo le signal obtenu en sortie du filtre passe-bas (40) afin d'engendrer le signal d'alimentation du dispositif (17) de restitution des contours.

13. Appareil selon l'une quelconque des revendications 10 à 12, caractérisé en ce que les dispositifs de projection étant des tubes cathodiques, il comprend, en amont du circuit (33) d'extraction des contours, un circuit (30) de correction inverse de gamma et, aux deux sorties dudit circuit de traitement, des circuits (43, 44) de correction de gamma.

14. Appareil selon l'une quelconque des revendications précédentes, caractérisé en ce qu'il comprend des éléments de retard (51, 56, 60) pour effectuer ladite exploration.

15. Appareil selon l'une quelconque des revendications précédentes, caractérisé en ce qu'il comprend des moyens comparateurs (53, 59) pour déterminer le signal de fond par comparaison entre la luminance du point projeté, la luminance d'au moins un autre point antérieur sur la même ligne et la luminance d'au moins un autre point sur une ligne précédente.

16. Appareil selon la revendication 15, caractérisé en ce qu'il comprend un filtre passe-bas (63) à la suite des moyens comparateurs (53, 59).

17. Appareil selon l'une quelconque des revendications précédentes, caractérisé en ce qu'il comprend, dans la voie de restitution du signal de fond, un circuit d'écrêtage (64) des signaux de fort niveau.

18. Appareil selon l'une quelconque des revendications précédentes, caractérisé en ce que le circuit de traitement comprend un atténuateur (65) dans la voie de restitution du signal de fond.

19. Appareil selon la revendication 2, caractérisé en ce qu'il comprend un soustracteur (67) destiné à ôter du signal vidéo complet, remis en phase par un élément à retard (54), le signal appliqué sur le dispositif de restitution du fond, de manière à produire le signal de contour.

20. Appareil selon l'une quelconque des revendications précédentes, caractérisé en ce que chacun des deux dispositifs de projection (101, 102) est un vidéo-projecteur.

21. Appareil selon la revendication 20, caractérisé en ce que le circuit de traitement est tel qu'il n'affecte que la seule composante de luminance (Y) fournie au premier vidéo-projecteur (102).

22. Appareil selon la revendication 21, caractérisé en ce que le circuit de traitement est tel que le second vidéo-projecteur (101) reçoit un signal de luminance (Y) représentant les contours de l'image, les composantes de différences de couleur R-Y et B-Y n'étant pas affectées.

23. Appareil selon la revendication 21, caractérisé en ce que chaque signal de différence de couleur (R-Y, B-Y) est, dans le premier vidéo-projecteur (102), appliqué à l'entrée correspondante (112, 111) du circuit de matriçage (108) par l'intermédiaire d'un amplificateur (116, 115) à gain variable en fonction de l'écart entre la luminance (Y) et la luminance $(Y_1)$ de fond.

24. Appareil selon l'une quelconque des revendications 20 à 23, caractérisé en ce qu'il comporte un sélecteur de mode pour permettre soit l'utilisation des vidéo-projecteurs couplés par le circuit de traitement soit l'utilisation individuelle.

25. Appareil selon la revendication 20, caractérisé en ce que le circuit de traitement comporte un filtre passe-bas (110) pour fournir un signal de luminance sans détails fins.

26. Appareil selon la revendication 20, caractérisé en ce que le circuit de traitement est tel que le second vidéo-projecteur (101) reçoit un signal de luminance (Y) avec des contours accentués, les composantes de différences de couleurs R-Y et B-Y n'étant pas affectées.

**Claims**

1. An apparatus for projecting video pictures, including at least two projection devices ($16_1$, 17 ; 101, 102) for projecting superposed pictures, characterized in that it comprises a circuit for processing the video signal such that the first one of the devices (16) restores the picture background signal, this processing circuit comprising an exploration circuit which searches for the lowest brightness value at the projected point and around this point and which affects this minimum brightness value to the signal for feeding the background restitution device (16).

2. An apparatus according to claim 1, characterized in that the circuit for processing the video signal is conceived in such a manner that the second projection device (17 ; 102) restores the picture contours, the contour signal being complementary to the background signal with respect to the video signal.

3. An apparatus according to claim 1 or 2, characterized in that the processing circuit comprises means for distributing the power dissipated by each one of the projection devices (16, 17) in such a way that for high light levels, the power dissipated by each one of these devices is the same, and that for medium and low light levels, the device for restoring the luminous background dissipates more power than the second device (17).

4. An apparatus according to any one of claims 1 to 3, characterized in that the two projection devices are monochromatic devices of even colour.

5. An apparatus according to claim 4, characterized in that green is the common colour of the two projection devices (16, 17) restoring respectively the background and the contour of the picture.

6. An apparatus according to claim 5, characterized in that said devices being cathode ray tubes, the tube (16) restoring the background comprises green phosphor elements of a large transmission spectrum.

7. An apparatus according to any one of the preceding claims, characterized in that the projection device (16) intended to restore the background of the picture is defocalized.

8. An apparatus according to any one of claims 4 to 6, characterized in that, the monochromatic projection devices (16, 17) being cathode ray tubes, the two tubes (16, 17) of even colour are disposed side by side, their axes ($16_2$, $17_2$) being mutually parallel and also parallel to the axes ($16_3$, $17_3$) of the corresponding lenses ($16_1$, $17_1$), the axes of these tubes being however shifted with respect to the axes of the lenses, such that the pictures projected by these two tubes converge on the projection screen.

9. An apparatus according to claim 8, characterized in that the axes of the other two tubes (18, 19) are disposed in the same plane as the axes of the tubes of even colour and are inclined with respect to said axes in order to ensure the convergence on the projection screen.

10. An apparatus according to claim 2, characterized in that the processing circuit comprises a circuit (33) for extracting the contours from the input video signal (v), and a subtracting member (35) which subtracts the signal produced by the extraction circuit from the video signal in order to produce the background signal.

11. An apparatus according to claim 10, characterized in that the subtracting member (35) is followed by a low pass filter (40).

12. An apparatus according to claim 11, characterized in that it comprises a second subtracting member (37) conceived to deduce from the video signal the signal obtained at the output of the low pass filter (40) in order to produce the signal for feeding the contours restoration device (17).

13. An apparatus according to any one of claims 10 to 12, characterized in that, the projection devices being cathode ray tubes, the apparatus comprises a circuit (30) for the inverse gamma correction upstream of the contours extraction circuit, and circuits (43, 44) for gamma correction at the two outputs of said processing circuit.

14. An apparatus according to any one of the preceding claims, characterized in that it comprises delay elements (51, 56, 60) for performing said exploration.

15. An apparatus according to any one of the preceding claims, characterized in that it comprises comparator means (53, 59) for determining the background signal by means of a comparison between the brightness of the projected point, the brightness of at least one other preceding point on this very line and the brightness of at least one other point on a preceding line.

16. An apparatus according to claim 15, characterized in that it comprises a low pass filter (63) downstream of the comparator means (53, 59).

17. An apparatus according to any one of the preceding claims, characterized in that it comprises, in the background signal restoration channel, a limiter circuit (64) for limiting the high level signals.

18. An apparatus according to any one of the preceding claims, characterized in that the processing circuit comprises an attenuator (65) in the background signal restoration channel.

19. An apparatus according to claim 2, characterized in that it comprises a subtracting member (67) conceived to subtract from the complete video signal after its phase correction by a delay element (54), the signal applied to the background restoration device such that the contour signal is produced.

20. An apparatus according to any one of the preceding claims, characterized in that both projection devices (101, 102) are a video projectors.

21. An apparatus according to claim 20, characterized in that the processing circuit is conceived to modify only the brightness component (Y) supplied to the first video projector (102).

22. An apparatus according to claim 21, characterized in that the processing circuit is conceived such that the second video projector (101) receives a brightness signal (Y) representing the contours of the picture, the components of colour differences R-Y and B-Y not being concerned.

23. An apparatus according to claim 21, characterized in that each colour difference signal (R-Y, B-Y) is applied in the first video projector (102) to the corresponding input (112, 111) of the matrix forming circuit (108) via an amplifier (116, 115) having a gain which is variable in accordance with the difference between the brightness (Y) and the background brightness ($Y_1$).

24. An apparatus according to any one of claims 20 to 23, characterized in that it comprises a mode selector allowing either the use of the video projectors coupled by the processing circuit, or the individual use.

25. An apparatus according to claim 20, characterized in that the processing circuit comprises a low pass filter (110) for supplying a brightness signal without fine details.

26. An apparatus according to claim 20, characterized in that the processing circuit is conceived such that the second video projector (101) receives a brightness signal (Y) with accentuated contours, the colour difference components R-Y and B-Y not being concerned.

**Patentansprüche**

1. Projektionsgerät für Videobilder mit mindestens zwei Projektionsvorrichtungen ($16_1$, 17 ; 101, 102) zur Projektion überlagerter Bilder, dadurch gekennzeichnet, daß es einen solchen Bildsignalbearbeitungskreis enthält, daß die erste dieser Vorrichtungen (16) das dem Bilduntergrund entsprechende Signal wiedergibt, wobei der Bearbeitungskreis einen Erfassungskreis aufweist, der den geringsten Helligkeitswert im Projektionspunkt und um diesen herum sucht und diesen geringsten Helligkeitswert dem Speisesignal der Vorrichtung (16) zur Wiedergabe des Hintergrunds zuteilt.

2. Gerät nach Anspruch 1, dadurch gekennzeichnet, daß der Bildsignalbearbeitungskreis so ausgebildet ist, daß die zweite Projektionsvorrichtung (17 ; 102) die Umrisse des Bildes wiedergibt, wobei das Umriß-Signal bezüglich des Bildsignals komplementär zum Untergrundsignal ist.

3. Gerät nach Anspruch 1 oder 2, dadurch gekennzeichnet, daß der Bearbeitungskreis Mittel enthält, um die von jeder der Projektionsvorrichtungen (16, 17) aufgenommene Leistung so zu verteilen, daß für hohe Lichtpegel die von jeder dieser Vorrichtungen aufgenommene Leistung die gleiche ist und für mittlere und geringe Lichtpegel die Vorrichtung zur Wiedergabe des Helligkeitsuntergrunds mehr Leistung als die zweite Vorrichtung (17) ausstrahlt.

4. Vorrichtung nach einem beliebigen der Ansprüche 1 bis 3, dadurch gekennzeichnet, daß die beiden Projektionsvorrichtungen monochromatisch sind und dieselbe Farbe besitzen.

5. Gerät nach Anspruch 4, dadurch gekennzeichnet, daß grün die gemeinsame Farbe dieser beiden Projektionsvorrichtungen (16, 17) zur Wiedergabe des Untergrunds bzw. der Umrisse des Bildes ist.

6. Gerät nach Anspruch 5, dadurch gekennzeichnet, daß die Vorrichtungen Kathodenstrahlröhren sind und die Röhre (16), die den Untergrund wiedergibt, grüne Leuchtkörper mit breitem Emissionsspektrum aufweist.

7. Gerät nach einem beliebigen der vorhergehenden Ansprüche, dadurch gekennzeichnet, daß die Projektionsvorrichtung (16), die zur Wiedergabe des Bilduntergrunds bestimmt ist, ein unscharfes Bild liefert.

8. Gerät nach einem beliebigen der Ansprüche 4 bis 6, dadurch gekennzeichnet, daß für den Fall, daß die monochromatischen Projektionsvorrichtungen (16, 17) Kathodenstrahlröhren sind, diese beiden Röhren (16, 17) gleicher Farbe nebeneinander liegen, wobei ihre Achsen ($16_2$, $17_2$) zueinander und zu den Achsen ($16_3$, $17_3$) der entsprechenden Objektive ($16_1$, $17_1$) parallel liegen, wogegen die Achsen dieser Röhren bezüglich der Achsen der Objektive verschoben sind, damit die von den beiden Röhren projezierten Bilder auf dem Projektionsschirm konvergieren.

9. Gerät nach Anspruch 8, dadurch gekennzeichnet, daß die Achsen der beiden anderen Röhren (18, 19) in derselben Ebene wie die Achsen der monochromatischen Röhren liegen und bezüglich dieser Achsen geneigt sind, im die Konvergenz auf dem Projektionsschirm sicherzustellen.

10. Gerät nach Anspruch 2, dadurch gekennzeichnet, daß der Bearbeitungskreis einen Kreis (33) zur Extraktion der Umrisse aus dem Bildeingangssignal (v) und ein Subtrahierglied (35) aufweist, das zur Erzeugung des Untergrundsignals das vom Extraktionskreis (33) erzeugte Signal vom Bildsignal abzieht.

11. Gerät nach Anspruch 10, dadurch gekennzeichnet, daß das Subtrahierglied (35) vom einem Tiefpaßfilter (40) gefolgt ist.

12. Gerät nach Anspruch 11, dadurch gekennzeichnet, daß es ein zweites Subtrahierglied (37) aufweist, das dazu bestimmt ist, vom Bildsignal das am Ausgang des Tiefpaßfilters (40) verfügbare Signal abzuziehen, um das Signal zur Speisung der Vorrichtung (17) zur Wiedergabe der Umrisse zu erzeugen.

13. Gerät nach einem beliebigen der Ansprüche 10 bis 12, dadurch gekennzeichnet, daß es für den Fall, daß die Projektionsvorrichtungen Kathodenstrahlröhren sind, vor dem Umriß-Extraktionskreis (33) einen inversen Gammakorrekturkreis (30) und an den beiden Ausgängen des Bearbeitungskreises Gammakorrekturkreise (43, 44) aufweist.

14. Gerät nach einem beliebigen der vorhergehenden Ansprüche, dadurch gekennzeichnet, daß es Verzögerungselemente (51, 56, 60) aufweist, um die Erfassung durchzuführen.

15. Gerät nach einem beliebigen der vorhergehenden Ansprüche, dadurch gekennzeichnet, daß es Komparatormittel (53, 59) aufweist, um das Untergrundsignal durch Vergleich zwischen der Helligkeit des projezierten Punkts, der Helligkeit mindestens eines anderen, früheren Punktes auf derselben Zeile und der Helligkeit mindestens eines Punkts auf einer vorhergehenden Zeile bestimmt.

16. Gerät nach Anspruch 15, dadurch gekennzeichnet, daß es ein Tiefpaßfilter (63) hinter den Komparatormitteln (53, 59) aufweist.

17. Gerät nach einem beliebigen der vorhergehenden Ansprüche, dadurch gekennezichnet, daß es im Kanal für die Wiedergabe des Untergrundsignals einen Begrenzerkreis (64) für Signale hohen Pegels besitzt.

18. Gerät nach einem beliebigen der vorhergehenden Ansprüche, dadurch gekennzeichnet, daß der Bearbeitungskreis ein Dämpfungsglied (65) im Kanal zur Wiedergabe des Untergrundsignals besitzt.

19. Gerät nach Anspruch 2, dadurch gekennzeichnet, daß es ein Subtrahierglied (67) aufweist, das dazu bestimmt ist, vom vollständigen Bildsignal, das durch ein Verzögerungselement (54) in Phase gebracht wurde, das an die Vorrichtung zur Wiedergabe des Untergrundes angelegte Signal abzuziehen, so daß das Umrißsignal erzeugt wird.

20. Gerät nach einem beliebigen der vorhergehenden Ansprüche, dadurch gekennzeichnet, daß jede der beiden Projektionsvorrichtungen (101, 102) ein Videoprojektor ist.

21. Gerät nach Anspruch 20, dadurch gekennzeichnet, daß der Bearbeitungskreis so ausgebildet ist, daß er nur die vom ersten Videoprojektor (102) gelieferte Helligkeitskomponente (Y) beeinflußt.

22. Gerät nach Anspruch 21, dadurch gekennzeichnet, daß der Bearbeitungskreis so ausgebildet ist, daß der zweite Videoprojektor (101) ein Helligkeitssignal (Y) zugeführt erhält, das die Umrisse des Bildes darstellt, wobei die Farbdifferenzkomponenten R-Y und B-Y nicht betroffen sind.

23. Gerät nach Anspruch 21, dadurch gekennzeichnet, daß jedes Farbdifferenzsignal (R-Y, B-Y) im ersten Videoprojektor (102) an den entsprechenden Eingang (112, 111) des Matrixbildungskreises (108) über einen Verstärker (116, 115) mit variablem Verstärkungsgrad abhängig vom Unterschied zwischen der Helligkeit (Y) und der Untergrundhelligkeit ($Y_1$) angelegt wird.

24. Gerät nach einem beliebigen der Ansprüche 20 bis 23, dadurch gekennzeichnet, daß es einen Betriebsartenwähler besitzt, um entweder die Verwendung der über den Bearbeitungskreis gekoppelten Videoprojektoren oder deren individuelle Verwendung zu erlauben.

25. Gerät nach Anspruch 20, dadurch gekennzeichnet, daß der Bearbeitungskreis ein Tiefpaßfilter (110) aufweist, um ein Helligkeitssignal ohne feine Einzelheiten zu liefern.

26. Gerät nach Anspruch 20, dadurch gekennzeichnet, daß der Bearbeitungskreis so ausgebildet ist, daß der zweite Videoprojektor (101) ein Helligkeitssignal (Y) mit herausgehobenen Umrissen liefert, wobei die Komponenten der Farbendifferenzen R-Y und B-Y nicht betroffen sind.

FIG_1-a

FIG_1-b

FIG_1-c

FIG_2-a

FIG_2-b

FIG_2-c

FIG_2-d

1

# FIG_3

## FIG_4-a

## FIG_4-b

## FIG_4-c

# FIG_5

## FIG_6-a

## FIG_6-b

## FIG_6-c

## FIG_6-d

## FIG_6-e

# FiG_7

# FiG_8-a

# FiG_8-b

# FiG_8-c

# FiG_8-d

# FiG_8-e

# FIG_9

# FIG_10

R-y

B-y

y

*107*

*106*

*105* ACCENTUATION DES CONTOURS  y'

*104*

*103*
R₁
V₁
B₁

*101*

*114* LR

*113* LR

*110* PB  y₁

*112*
*111*
*109*

*108*

R₂
V₂
B₂

*102*

# FIG_11

R-y

B-y

y

*101*
*107*
*106*
*104*

*103*
R₁
V₁
B₁

*114* LR

*113* LR

*116* X

*115* X

*112*
*111*
*109*

*108*
R₂
V₂
B₂

*102*

A

*51* Z₁

*56* Z₁

MIN/3

1 H

MIN/2

PASSE BAS

ECRETAGE DES BLANCS

*65* K

*54* Z₂

*67* —

Y'₁

*118* *119*
*117* —  Δy₁

6